Europäisches Patentamt

European Patent Office

Office européen des brevets

(19)

(11) Publication number: **0 115 129**
**B1**

(12) EUROPEAN PATENT SPECIFICATION

(45) Date of publication of patent specification: **10.08.88**

(51) Int. Cl.⁴: **B 60 C 9/18,** B 60 C 17/00

(21) Application number: **83307285.3**

(22) Date of filing: **30.11.83**

(54) **Segmented-band banded tire.**

(30) Priority: **24.01.83 US 460147**

(43) Date of publication of application:
**08.08.84 Bulletin 84/32**

(45) Publication of the grant of the patent:
**10.08.88 Bulletin 88/32**

(84) Designated Contracting States:
**SE**

(56) References cited:
**EP-A-0 101 400**
**DE-A-1 480 965**
**FR-A-1 347 506**
**FR-A-2 351 811**
**FR-A-2 398 625**
**FR-E- 23 439**
**GB-A-1 035 341**
**US-A-2 059 764**
**US-A-2 958 359**
**US-A-3 057 392**
**US-A-3 093 181**
**US-A-3 111 973**
**US-A-4 111 249**

(73) Proprietor: **GRUMMAN AEROSPACE CORPORATION**
**South Oyster Bay Road**
**Bethpage, NY 11714 (US)**

(72) Inventor: **Kopsco, M. Alan**
**3072 Wilson Avenue**
**Wantagh New York 11793 (US)**
Inventor: **Markow, Edward G.**
**141 Connetquot Drive**
**Oakdale New York 11769 (US)**

(74) Representative: **Mosey, Stephen George et al**
**MARKS & CLERK Alpha Tower Suffolk Street**
**Queensway**
**Birmingham B1 1TT (GB)**

Courier Press, Leamington Spa, England.

## Description

### Field of the invention

This invention relates to banded radial run-flat pneumatic tires and, more particularly, to banded tires having a transversely segmented band.

### Background of the invention

The run-flat pneumatic tire is an area of tire technology that has engaged investigators over the years. A run-flat tire is one designed to be able to support a vehicle for operation at reasonable speeds for some predetermined distance even if the tire has partially or totally lost its inflation pressure. A recent successful development in the art of run-flat tires is the band-reinforced radial tire invented by one of the inventors in the present invention, Edward G. Markow, which banded tire is the subject of U.S. Patent No. 4,111,249, assigned to the assignee of the present invention. The tire of the present invention is in the class of banded tires set forth in the aforementioned patent to Edward G. Markow and corresponds to the first part of claim 1.

A factor in the design of banded run-flat tires that affects the handling of the vehicle on which the tires are mounted is the bending stiffness of the band across the tire with respect to the bending stiffness circumferentially. Performance of a banded run-flat tire can be improved in a significant manner if the band is constructed such that its bending stiffness in a lateral direction across the band is substantially less than the bending stiffness circumferentially.

### Description of the prior art

In the prior art, Arthur H. Marks, in U.S. Patent No. 840,503, teaches a run-flat tire having one or more flat, comparatively heavy metal rings, preferably of steel, embedded in the tire crown. In Marks, however, the object is to produce a tire that has a practically rigid tread such that there is little or no flattening of the tire at the point of contact with the ground. A rigid tire thus is not a run-flat tire of a class in which a comparatively thin band is employed in the crown of the tire, the resilient thin band being supported and stabilized by a multiplicity of radial spoke-like elements in the sidewalls of the tire. Further, there is nothing disclosed in Marks that teaches a segmented band having a bending stiffness circumferentially that is considerably greater than the bending stiffness laterally across the tire. Because of the mentioned consideration the tire of Marks would be totally unacceptable for present day use because of ride, handling, and service life deficiencies inherent in a tire provided with a heavy, rigid metal band in its crown.

GB Patent Specification GB—A—1 035 341 teaches a run-flat tire having reinforcement rings placed side by side and embedded in the crown portion. However this known tire shows the same disadvantages as the above mentioned prior art.

U.S. Patent Specifications Nos. 2059764, 2958359, 3057392 and 4111249, as well as a French Patent Specification No. 2351811 all show pneumatic tires having some form of co-axially spaced reinforcing means intermediate a body portion of the tire and its tread portion. However with none of the constructions of these prior art specifications does the reinforcing means transmit and distribute compressive forces among all the reinforcing means.

### Summary of the invention

This invention relates to a run-flat radial tire having an elastomeric casing with a treaded crown portion and sidewalls, a resilient, annular compressive load-bearing member for supporting the tire upon loss of tire pressure, and a plurality of radial elements embedded within the casing for transmitting compressive load forces to the compressive load-bearing member, where the compressive load-bearing member is characterized by a plurality of resilient band elements co-axially arranged and spaced from each other and embedded in the crown portion of said casing for receiving and resisting compressive load forces imposed thereon that are transmitted by said radial elements, and an elastomeric material located between adjacent individual band elements for transmitting and distributing compressive forces among all band elements and for providing a preselected ratio of tire bending stiffness in the circumferential direction compared with the lateral direction to thereby improve tire performance when the tire is deflated.

It is thus a principal object of the invention to provide a run-flat radial tire having a segmented band such that the control, handling, and service life characteristics of the tire are significantly improved, compared with the constructions of the above-mentioned prior art.

It is a further object of the invention to provide a run-flat radial tire in which lateral bending stresses induced by road surface anomalies such as bumps, holes, rocks, and the like, are reduced and band fatigue life is significantly enhanced.

Yet another object of the invention is to provide a run-flat radial tire having a segmented band such that a multi-step failure sequence is provided for safety.

A still further object of the invention is to provide a run-flat radial tire having a segmented band in which it is possible by using segments of different diameters to accommodate for tread curvature without the requirement for the crowning of individual band segments or elements.

A yet further object of the invention is to provide a run-flat radial tire having a segmented band whose design is compatible with conventional tire making processes and equipment and with conventional servicing and maintenance equipment and procedures.

Other objects and advantages will become apparent from a reading of the Specification and a study of the accompanying drawings.

## Description of the drawings

For the purpose of illustrating the invention, there is shown in the drawings the forms which are presently preferred; however, it should be understood that the invention is not necessarily limited to the precise arrangements and instrumentalities here shown.

Fig. 1 is a cross-sectional view of an embodiment of the tire of the invention; and

Fig. 2 is a cross-sectional view of a further embodiment of the tire of the invention.

## Description of the preferred embodiments

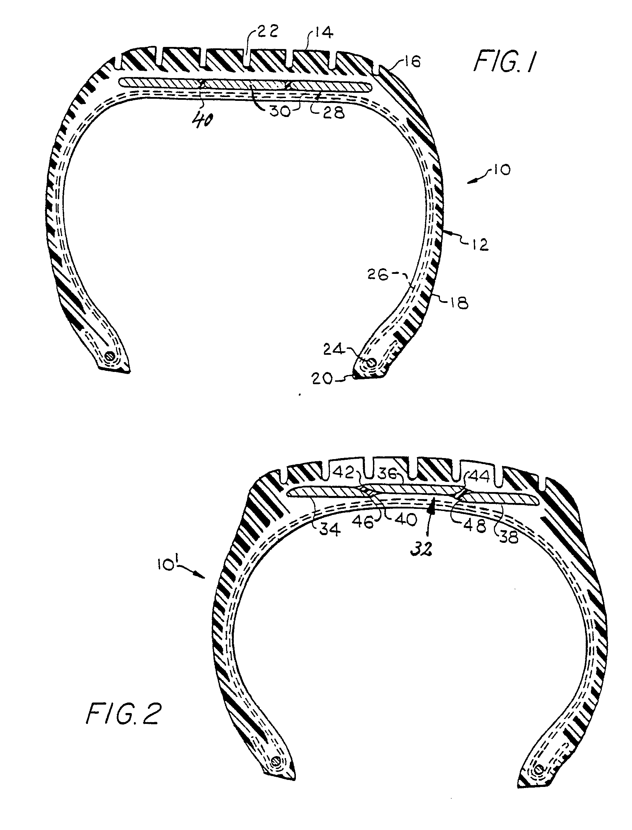

Having more particular reference to the drawings, Fig. 1 illustrates an embodiment of the tire 10 of the invention. Tire 10 comprises a carcass or casing 12 having an outer peripheral tread portion 14 in the crown 16 of the casing and sidewalls 18 extending from either side of the crown to beads 20 in the radially inside peripheral regions of the sidewalls. Treads 22 in any desired pattern can be incised in the tread portion 14 of the tire casing. Beads 20, which can be reinforced with the usual annular cords or wires 24, are adapted to seat in the usual manner in an airtight relationship in the rim of a wheel (not shown) upon which the tire will be mounted for operation. The sidewalls 18 of the casing are reinforced by the usual known weftless radial plies or elements 26 of radial tires. Radial elements 26 can be fabricated out of steel wires or suitable textile fibers as is well known in the art. Located in the crown of the radial tire just described underlying the tread thereof is an annular compression element or band 28. Band 28 is reinforced and stabilized by the radial elements 26 in the sidewalls 18 to give tire 10 its run-flat capabilities.

As stated previously herein, the performance of a banded run-flat radial tire is improved if the band is designed such that its bending stiffness in the hoopwise circumferential direction is significantly, up to a 1000 times, as great as its bending stiffness in the lateral direction across the width of the band. Bending stiffness herein is defined as the product of the bending modulus of elasticity E and section moment of intertia I. The latter quantity is arbitrarily derived as will be described in further detail herein.

In this invention, the desired bending stiffness ratio of the band transverse its width with respect to the hoopwise direction is obtained by transversely segmenting the band 28. Thus, the band has a number, preferably three, side-by-side band elements 30 connected by an elastomer 32. To achieve the desired 1000:1 EI ratio, the spacing between the band elements 30 is tailored in direct proportion to the stiffness of the elastomer 32. In a typical design of a tire provided with a segmented band in accordance with the teachings of the invention, using a FR 70-14 radial tire with a three-segment fiberglass/epoxy band and a tire rubber elastomer 32, the hoopwise EI was 20,837 lb-in and the equivalent lateral EI was approximately 20 lb-in$^2$.

In the design of the band, hoopwise bending stiffness is expressed by multiplying the bending modulus of elasticity E of the composite from which the band is made by the total section of inertia I of all the band elements or segments, ignoring the bending stiffness of the elastomer. For an existing band, the E of its composite material can be determined by a three-point bending test on a laboratory specimen cut from the band. It will be appreciated that this specimen will be standard except for its curvature. Lateral bending stiffness, for the purposes of this design, is an arbitrarily derived EI product for a uniform beam whose maximum bending deflection is equivalent to that of an actual non-uniform composite/elastomer beam consisting of a unit-width slice across the band. For an existing band, such a slice can be tested by simply supporting it at its ends and measuring its maximum deflection under load. To avoid concentrated loads on the elastomer, the test specimen should be loaded uniformly. From the known loading, deflection, and beam length, a uniform beam EI can be calculated by the standard formula:

$$EI = \frac{5wL^4}{384\delta}$$

where:
  w=load per inch
  L=length between support
  $\delta$=deflection at center

For a proposed design where no sample exists, a unit-width lateral slice can be described as a beam of non-uniform section, assigning handbook values of E to the primary material and the elastomer of the band respectively. Using the more complex handbook formula for a non-uniform beam with a uniformly distributed load, the maximum deflection can be calculated. This will then allow the equivalent uniform beam EI to be calculated as set forth above.

In the Fig. 1 embodiment of the tire 10 of the invention a segmented band 28 having side-by-side band elements 30 of equal diameter is used. In the further embodiment illustrated in Fig. 2, the tire 10' has a band 32 that is segmented into band elements 34, 36, and 38, with the intermediate band element 36 having a greater diameter than the band elements 34 and 38 on either side of it. A segmenting of the band into three band elements is preferred but, of course, the band can be segmented into a different number of segments to meet specific requirements. To substantially eliminate the possibility that a puncturing object will penetrate the band 32 through the elastomer 40 connecting the band elements, the adjoining edges of those elements can be overlapped. Thus, circumferential edges 42 and 44 of band element 36 can overlap circumferential edges 46 and 48 of band elements 34 and 38 respectively. As shown, the radially inside surface of band element 36 at edges 42 and 44 is bevelled to match bevels on the radially outside surfaces of band elements 34 and 38 at their edges 46 and 48. With the exception that the elements of the band are not of equal diameters, tire 10' is substantially identical to the tire 10 embodiment of the invention illustrated in Fig. 1. The two embodiments have the same casing, sidewalls, tread portion, radial elements, and the like. In the interests of brevity, a detailed description thereof thus will not be given.

## Claims

1. A run-flat radial tire having an elastomeric casing (12) with a treaded crown portion (16) and sidewalls (18), a resilient, annular compressive load-bearing member (28, 32) for supporting the tire upon loss of tire pressure, and a plurality of radial elements (26) embedded within the casing for transmitting compressive load forces to the compressive load-bearing member, where the compressive load-bearing member (28, 32) is characterized by a plurality of resilient band elements (30; 34, 36, 38) co-axially arranged and spaced from each other and embedded in the crown portion of said casing for receiving and resisting compressive load forces imposed thereon that are transmitted by said radial elements, and an elastomeric material (40) located between adjacent individual band elements for transmitting and distributing compressive forces among all band elements and for providing a preselected ratio of tire bending stiffness in the circumferential direction compared with the lateral direction to thereby improve tire performance when the tire is deflated.

2. The run-flat tire according to Claim 1 wherein the band segments (30) have identical diameters.

3. The run-flat tire according to Claim 1 wherein the band segments comprise:
at least one centrally disposed band (36); and a plurality of bands (34, 38) positioned laterally outwardly from the central band and reduced in diameter for following the tire tread contour.

4. The run-flat tire according to Claim 3 wherein confronting edges (42, 44, 46, 48) of the bands (34, 36, 38) overlap for increasing puncture resistance of the tire.

5. The run-flat tire according to Claim 4 wherein the confronting edges (42, 44, 46, 48) are beveled to retain an equidistant relationship between the confronting edges.

## Patentansprüche

1. Radialreifen, der auch im platten Zustand läuft, mit Elastomermantel (12) mit profilierter Krone (16) und Seitenwänden (18), mit einem elastischen, ringförmigen Druckkraft-Aufnahmeteil (28, 32), das den Reifen bei Verlust von Reifendruck abstützt, und mit einer Mehrzahl von radialen Elementen (26), die in den Mantel eingebettet sind und Druckkräfte auf den Druckkraft-Aufnahmeteil übertragen, wobei der Druckkraft-Aufnahmeteil (28, 32) gekennzeichnet ist durch eine Mehrzahl von elastischen Gürtelelementen (30; 34, 36, 38), die koaxial angeordnet und voneinander beabstandet und in die Krone des Mantels eingebettet sind und die sie beaufschlagende Druckkräfte, die von den radialen Elementen übertragen werden, aufnehmen und diesen standhalten, und ein zwischen benachbarten einzelnen Gürtelelementen angeordnetes Elastomermaterial (40), das Druckkräfte auf sämtliche Gürtelelemente überträgt und verteilt und das für ein vorbestimmtes Verhältnis der Reifenbiegesteifigkeit in Umfangsrichtung zu derjenigen in seitlicher Richtung sorgt und dadurch bei plattem Reifen das Laufverhalten des Reifens verbessert.

2. Reifen nach Anspruch 1, wobei die Gürtelsegmente (30) identische Durchmesser haben.

3. Reifen nach Anspruch 1, wobei die Gürtelsegmente umfassen:
wenigstens einen mittig angeordneten Gürtel (36); und eine Mehrzahl Gürtel (34, 38), die seitlich außerhalb des mittigen Gürtels angeordnet und durchmesserkleiner sind, um der Kontur des Reifenprofils zu folgen.

4. Reifen nach Anspruch 3, wobei einander gegenüberstehende Ränder (42, 44, 46, 48) der Gürtel (34, 36, 38) einander überlappen, um die Durchstoßfestigkeit des Reifens zu erhöhen.

5. Reifen nach Anspruch 4, wobei die einander gegenüberstehenden Ränder (42, 44, 46) angeschrägt sind, um zwischen den einander gegenüberstehenden Rändern eine gleichbeabstandete Beziehung aufrechtzuerhalten.

## Revendications

1. Pneumatique radial capable de rouler dégonflé, présentant une carcasse élastomère (12) avec une partie de sommet (16) à bande de roulement et des parois latérales (18), présentant un élément porteur de charge de compression annulaire et élastique (28, 32) destiné à supporter le pneumatique en cas de dégonflement, et présentant un certain nombre d'éléments radiaux (26) enrobés à l'intérieur de la carcasse destinés à transmettre les forces de charge de compression à l'élément porteur de charge de compression, selon lequel l'élément porteur de charge de compression (28, 32) est caractérisé par un certain nombre d'éléments sous forme de bandes élastiques (30; 34, 36, 38) disposés coaxialement et distants les uns des autres qui sont enrobés dans la partie de sommet de ladite carcasse afin de recevoir les (et de résister aux) forces de charge de compression exercées sur eux qui sont transmises par lesdits éléments radiaux, et par un matériau élastomère (40) situé entre les éléments en forme de bandes individuels voisins et destiné à transmettre et répartir les forces de compression parmi les différents éléments en forme de bandes, et à fournir un taux présélectionné de résistance à la flexion du pneumatique dans le sens circonférentiel par rapport au sens latéral, améliorant ainsi la performance du pneumatique lorsque ce dernier est dégonflé.

2. Pneumatique capable de rouler dégonflé selon la revendication 1, dans lequel les segments en forme de bandes (30) ont des diamètres identiques.

3. Pneumatique capable de rouler dégonflé selon la revendication 1, dans lequel les segments en forme de bandes comprennent au moins une bande disposée centralement (36), et un certain nombre de bandes (34, 38) positionnés latéralement à l'extérieur de la bande centrale et de diamètre réduit afin de suivre le contour de la bande de roulement du pneumatique.

4. Pneumatique capable de rouler dégonflé selon la revendication 3, dans lequel les bords en vis-à-vis (42, 44, 46, 48) des bandes (34, 36, 38) se recouvrent afin d'augmenter la résistance à la perforation du pneumatique.

5. Pneumatique capable de rouler dégonflé selon la revendication 4, dans lequel les bords en vis-à-vis (42, 44, 46, 48) sont biseautés afin de maintenir une relation d'équidistance entre les bords respectivement en vis-à-vis.

FIG.1

FIG.2